# EUROPÄISCHE PATENTSCHRIFT

(11) **EP 4 028 735 B1**
(45) Veröffentlichungstag und Bekanntmachung des Hinweises auf die Patenterteilung: **29.04.2026**
(21) Anmeldenummer: 20760825.8
(22) Anmeldetag: 20.08.2020
(51) Int. Cl.: G01K 1/143, G01K 13/02, G01K 15/00

(54) **NICHT INVASIVES THERMOMETER**
NONINVASIVE THERMOMETER
THERMOMÈTRE NON INVASIF

(30) Priorität: 12.09.2019 DE 102019124604
(43) Veröffentlichungstag der Anmeldung: 20.07.2022
(73) Patentinhaber: Endress+Hauser Wetzer GmbH+Co. KG, 87484 Nesselwang (DE)
(72) Erfinder: KOCH, Daniel, 87466 Oy-Mittelberg (DE); SCHALLES, Marc, 99097 Erfurt (DE); BRÜNDL, Harald, 85247 Schwabhausen (DE); WIEDEMANN, Stephan, 87544 Bihlerdorf (DE); WIEDEMANN, Peter, 87480 Weitnau (DE); ISELT, Torsten, 87435 Kempten (DE); PEUKER, Christian, 87484 Nesselwang (DE); VRDOLJAK, Pavo, 87484 Nesselwang (DE); WOLF, Georg, 87616 Marktoberdorf (DE); KALLWEIT, Christian, 87700 Memmingen (DE); MORNHINWEG, Markus, 86911 Dießen (DE); UMKEHRER, Alfred, 87659 Hopferau (DE)
(74) Vertreter: Endress + Hauser Group Services (Deutschland) AG+Co. KG
(86) Internationale Anmeldenummer: PCT/EP2020/073390
(87) Internationale Veröffentlichungsnummer: WO 2021/047882

(56) Entgegenhaltungen:
- DE-A1- 102009 003 848
- DE-A1- 102015 112 425
- DE-A1- 102017 100 267
- DE-A1- 3 126 931
- DE-C2- 4 244 189
- DE-U1- 202006 003 903
- US-A1- 2014 334 517

## Beschreibung

Die Erfindung betrifft eine Vorrichtung zur Bestimmung und/oder Überwachung der Temperatur eines Mediums in einem Behältnis in der Automatisierungstechnik. Bei dem Behältnis handelt es sich beispielsweise um einen Behälter oder um eine Rohrleitung.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Genauigkeit der Temperaturmessung hängt empfindlich von den jeweiligen thermischen Kontakten und der jeweils vorherrschenden Wärmeleitung ab. Die Wärmeströme zwischen dem Medium, dem Behältnis, in welchem sich das Mediums befindet, dem Thermometer und der Prozessumgebung spielen hier eine entscheidende Rolle. Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden. Die Zeit für eine Reaktion eines Thermometers auf eine Temperaturänderung wird auch als Ansprechzeit des Thermometers bezeichnet.

Eine hohe Messgenauigkeit lässt sich insbesondere dann erzielen, wenn der Temperatursensor in das jeweilige Medium eintaucht. So sind zahlreiche Thermometer bekannt geworden, bei denen der Temperatursensor mehr oder weniger direkt mit dem jeweiligen Medium in Kontakt gebracht wird. Auf diese Weise lässt sich eine vergleichsweise gute Kopplung zwischen dem Medium und dem Temperatursensor erzielen.

Für verschiedene Prozesse und für viele Behältnisse, insbesondere kleine Behälter oder Rohrleitungen, ist jedoch eine nicht invasive Bestimmung der Temperatur vorteilhafter. So sind ebenfalls Thermometer bekannt geworden, die von außen/innen an dem jeweiligen Behältnis, in dem sich das Medium befindet, befestigt werden können. Solche Geräte, auch Oberflächenthermometer oder Anlegefühler genannt, sind beispielsweise aus Dokumenten wie der DE102014118206A1 oder DE102015113237A1 bekannt geworden. Bei derartigen Messgeräten sind die Temperatursensoren nicht in direktem Kontakt mit dem jeweiligen Prozess. Dies erfordert, dass zur Sicherstellung einer guten thermischen Kopplung verschiedene zusätzliche Aspekte berücksichtigt werden müssen. So ist beispielsweise der mechanische und damit auch der thermische Kontakt zwischen Behälter und Thermometer entscheidend für die erreichbare Messgenauigkeit. Bei unzureichendem Kontakt ist eine genaue Temperaturbestimmung nicht möglich.

Als Oberflächen- oder Hautpunktthermometer werden häufig Messeinsätze mit Temperatursensoren in Form von Thermoelementen verwendet, die direkt an die Außenfläche oder Haut des Rohres oder Behälters angeschweißt werden. In solchen Fällen kann der Austausch der Thermoelemente jedoch zu einem zeitaufwändigen und kostspieligen Prozess werden, insbesondere weil ein Austausch eine vorübergehende Abschaltung des Prozesses und/oder der Anwendung erfordern kann. Um diese Nachteile zu überwinden, sind beispielsweise aus der US5382093 oder der bisher unveröffentlichten europäischen Patentanmeldung mit dem Aktenzeichen 18198608.4 jeweils Ausgestaltungen entsprechender Thermometer bekannt geworden, die einen einfachen Austausch der Temperatursensoren ermöglichen.

Darüber hinaus sind zahlreiche, unterschiedliche Ausgestaltungen von Thermometern zur nicht invasiven Temperaturmessung bekannt geworden, wie beispielsweise in den

Dokumenten US2016/0047697A1, DE102005040699B3, EP3230704B1 oder EP2038625B1 beschrieben. Erwähnenswert sind auch die folgenden Dokumente: US 2014/334517 A1, DE 10 2009 003848 A1, DE 20 2006 003903 U1, DE 31 26 931 A1, DE 10 2015 112425 A1 und DE 10 2017 100267 A1. Insbesondere offenbart US 2014/334517 A1 einen Temperatursensorstreifen zum Erfassen der Temperatur eines Werkstücks während des Schweißens offen, der ein Trägermaterial und eine Vielzahl von Temperatursensoren umfasst, die in ein Isoliermaterial eingebettet sind, wobei das Isoliermaterial so konfiguriert ist, dass es die Temperatursensoren thermisch isoliert thermisch zu isolieren. Weiterhin offenbart DE 31 26 931 A1 eine Vorrichtung zur Anbringung und Halterung eines Temperaturfühlers an einem rohrartigen Gegenstand, die eine Manschette aus zwei Lagen eines Glasfaser-Bandes umfasst. Der Temperaturfühler ist auf einer dünner Kupferfolie zwischen den Beiden Lagen der Manschette angeordnet. Schließlich offenbart DE 42 44 189 C2 einen Anlegetemperaturfühler zur Bestimmung der Oberflächentemperatur eines Messobjekts , bestehend aus einem gummielastischen Kautschukmaterial in Zylinderform und einer an die Stirnfläche des Zylinders anvulkanisierten Kontaktplatte mit Halterungs- oder Widerhaken, so dass das gummielastische Haltesystem und die Kontaktplatte zur festen Verbindung ineinander eingreifen. Die Kontaktplatte steht ein wenig aus dem gummielastischen Kautschukmaterial hervor, so dass ein ungestörter Kontakt mit der Objektoberfläche erfolgen kann. Auf der Innenseite der Kontaktplatte ist mit Wärmeleitkleber ein Thermoelement befestigt.

Eine zentrale Problematik bei der nicht invasiven Temperaturbestimmung stellt die Wärmeableitung vom Prozess an die Umgebung dar. Diese sorgt für einen deutlich höheren Messfehler als im Falle einer direkten Einbringung des jeweiligen Temperatursensors in den Prozess.

Daher liegt der Erfindung die Aufgabe, ein Thermometer zur nicht invasiven Temperaturmessung bereitzustellen, welches sich durch eine hohe Messgenauigkeit auszeichnet.

Diese Aufgabe wird gelöst durch die Vorrichtung zur Bestimmung und/oder Überwachung einer Prozessgröße, insbesondere der Temperatur oder des Durchflusses, eines Mediums in einem Behältnis, insbesondere einem Behälter, einem Container oder einer Rohrleitung, nach Anspruch 1. Die erfindungsgemäße Vorrichtung umfasst einen Temperatursensor zur Erfassung der Temperatur und ein flexibles, wärmeleitfähiges Trägerelement, welches Trägerelement an einer Außenwandung des Behältnisses anordenbar ist, wobei der Temperatursensor auf dem Trägerelement befestigt ist.

Das Trägerelement ist insbesondere derart ausgestaltet, dass es an die Konturen des Behältnisses anpassbar ist. Das Trägerelement kann beispielsweise zumindest teilweise um die Wandung des Behältnisses herum angeordnet sein. Besonders bevorzugt ist eine Anordnung entlang einer Umfangslinie bezogen auf einer Querschnittsfläche senkrecht zur Längsachse des Behältnisses im Falle eines Behältnisses in Form einer Rohrleitung.

Der Temperatursensor ist vorzugsweise in einem dem Behältnis im daran angeordneten Zustand abgewandten Bereich des Trägerelements an dem Trägerelement befestigt. Die Vorrichtung wird von einem äußeren Bereich des Behältnisses mit dem Behältnis in thermischen Kontakt gebracht. Die Temperatur des Mediums wird demnach über eine Wandung des Behältnisses indirekt bestimmt. Mittels des wärmeleitfähigen Trägerelements wird dabei Wärme vom Prozess zu dem zumindest einen Temperatursensor geleitet, welcher somit im Wesentlichen im thermischen Gleichgewicht mit dem Prozess ist. Der Temperatursensor ist also im Wesentlichen der Prozesstemperatur ausgesetzt, obwohl er sich außerhalb des Behältnisses befindet.

Dies wiederum führt zu einer erhöhten Messgenauigkeit der Vorrichtung.

Die Vorrichtung kann optional weiterhin über eine Elektronik verfügen. Alternativ kann die Elektronik auch eine separate, mit der Vorrichtung verbindbare, Komponente sein. Dem Temperatursensor ist ferner vorteilhaft zumindest ein Anschlussdraht zur elektrischen Kontaktierung zugeordnet.

Eine Ausgestaltung beinhaltet, dass es sich bei dem Temperatursensor um ein Widerstandselement oder um ein Thermoelement handelt.

Die Vorrichtung kann weiterhin auch mehr als einen Temperatursensor umfassen, wobei alle verwendeten Temperatursensoren auf dem Trägerelement befestigt sind.

Eine weitere Ausgestaltung beinhaltet, dass die Vorrichtung zumindest ein Referenzelement zur in situ Kalibrierung und/oder Validierung zumindest des Temperatursensors umfasst, welches auf dem Trägerelement befestigt ist, und welches Referenzelement zumindest teilweise aus zumindest einem Material besteht, für welches Material im zur Kalibrierung des ersten Temperatursensors relevanten Temperaturbereich zumindest ein Phasenübergang bei zumindest einer vorgegebenen Phasenübergangstemperatur auftritt, für welchen Phasenübergang das Material in der festen Phase verbleibt. In dieser Hinsicht sei auf die EP02612122B1 verwiesen.

Vorteilhaft sind der Temperatursensor und das Referenzelement durch die Verwendung des wärmeleitfähigen Trägerelements unabhängig von der genauen Anordnung auf dem Trägerelement relativ zueinander stets im thermischen Gleichgewicht.

In noch einer Ausgestaltung umfasst die Vorrichtung ein Heizelement, welches auf dem Trägerelement befestigt ist. Mittels der Heizeinheit kann die Vorrichtung zudem auf eine vorgebbare Temperatur geheizt werden. Wieder sorgt das wärmeleitfähige Trägerelement dafür, dass alle an dem Trägerelement befestigten Komponenten der Vorrichtung im Wesentlichen der vorgebbaren Temperatur ausgesetzt sind.

Darüber hinaus kann mittels des Heizelements eine Bestimmung des Durchflusses nach dem an sich aus dem Stand der Technik wohlbekannten Messprinzip der thermischen Durchflussmessung vorgenommen werden.

Demnach lässt sich der Durchfluss auf zwei unterschiedliche Arten bestimmen. Unter den Begriff Durchfluss fallen im Rahmen der vorliegenden Erfindung sowohl ein Volumendurchfluss als auch ein Massendurchfluss des Mediums. Ebenso kann eine Durchflussgeschwindigkeit oder Durchflussrate des Mediums ermittelt werden.

Gemäß dem ersten Messprinzip wird ein Sensorelement einem durch eine Rohrleitung strömenden Medium ausgesetzt und derart beheizt, dass seine Temperatur im Wesentlichen konstant bleibt. Bei bekannten, und zumindest zeitweise konstanten Mediumseigenschaften, wie der Mediumstemperatur, dessen Dichte oder auch Zusammensetzung, kann anhand der zum Halten der Temperatur auf den konstanten Wert notwendigen Heizleistung der Massedurchfluss des Mediums durch die Rohrleitung ermittelt werden. Unter der Mediumstemperatur sei dabei jene Temperatur verstanden, welche das Medium ohne einen zusätzlichen Wärmeeintrag eines Heizelements aufweist. Bei dem zweiten Messprinzip wird dagegen das Heizelement mit konstanter Heizleistung betrieben und die Temperatur des Mediums stromabwärts des Heizelements gemessen. In diesem Falle gibt die gemessene Temperatur des Mediums Aufschluss über den Massedurchfluss.

Das Heizelement kann beispielsweise in Form einer Widerstandsheizung ausgeführt sein.

Beispielsweise werden sogenannte Widerstandselemente, z. B. RTD-Widerstandselemente (Resistance Temperature Detector), insbesondere Platinelemente, eingesetzt, wie sie unter den Bezeichnungen PT10, PT100, und PT1000 auch kommerziell erhältlich sind. Die Widerstandselemente werden über die Umsetzung von ihnen zugeführter elektrischer Leistung, z. B. in Folge einer erhöhten Stromzufuhr, erwärmt.

In noch einer Ausgestaltung der Vorrichtung umfasst der Temperatursensor ein temperaturempfindliches Sensorelement, welches über zumindest eine erste und eine zweite Anschlussleitung elektrisch kontaktiert ist, wobei die erste Anschlussleitung in einen ersten und einen zweiten Abschnitt unterteilt ist, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, wobei die zweite Anschlussleitung aus dem zweiten Material besteht, und wobei der erste Abschnitt der ersten Anschlussleitung und zumindest ein Teil der zweiten Anschlussleitung einen ersten Differenz-Temperatursensor in Form eines Thermoelements bilden. In diesem Zusammenhang sei auf die bisher unveröffentlichte deutsche Patentanmeldung mit dem Aktenzeichen 102018116309.6 verwiesen. Mit einer derartigen Ausgestaltung des Temperatursensors ist es möglich, eine Wärmeableitung im Bereich des Temperatursensors erfassbar. Eine genaue Kenntnis der Wärmeableitung erhöht weiter die Messgenauigkeit der Vorrichtung. Im Falle der Bestimmung eines Durchflusses lassen sich mit abnehmender Wärmeableitung höhere Durchflussraten des Mediums in dem Behältnis detektieren, d.h. der Messbereich der Vorrichtung kann erweitert werden.

Bevorzugt sind der zumindest eine Temperatursensor sowie das ggf. ebenfalls vorhandene Referenzelement und/oder Heizelement, allesamt in einem dem Behältnis im daran angeordneten Zustand abgewandten Bereich des Trägerelements an dem Trägerelement befestigt. Dabei sind alle denkbaren, insbesondere geometrischen, Anordnungen der genannten Komponenten der Vorrichtung auf dem Trägerelement denkbar und fallen unter die vorliegende Erfindung.

Erfindungsgemäß besteht das Trägerelement aus einem metallischen Gewebe oder Geflecht, insbesondere unter Verwendung von Kupfer. Neben Kupfer können aber auch andere Metalle zur Herstellung eines erfindungsgemäßen Trägerelements in Form eines metallischen Gewebes oder Geflechts herangezogen werden und fallen ebenfalls unter die vorliegende Erfindung. Bei dem Trägerelement handelt es sich dabei vorzugsweise um ein flächiges Gebilde mit vorgebbaren geometrischen Dimensionen. Unter einem Gewebe wird dabei ein aus zwei unterschiedlichen biegsamen Metallsträngen bzw. Metalldrähten - Kette und Schluss - des jeweils verwendeten Metalls hergestelltes Gebilde verstanden, die sich regelmäßig unter einem bestimmten Winkel kreuzen, während ein Geflecht ein aus mehreren ineinandergeschlungenen biegsamen Metallsträngen bzw. Metalldrähten besteht.

Erfindungsgemäß umfasst die Vorrichtung eine thermische Isolationseinheit, welche das Trägerelement zumindest teilweise umgibt. Insbesondere umgibt die thermische Isolationseinheit das Trägerelement zumindest teilweise in einem dem Prozess im daran befestigten Zustand des Trägerelements abgewandten Bereich umgibt. Die Isolationseinheit dient der thermischen Isolierung des Trägerelements sowie des zumindest einen daran befestigten Temperatursensors gegenüber der Umgebung. Auf diese Weise wird eine unerwünschte Wärmeableitung an die Umgebung, vermieden, welche zu einem unerwünschten Temperaturgradienten, insbesondere im Bereich der Vorrichtung, führt.

Es ist von Vorteil, wenn die thermische Isolationseinheit zumindest teilweise aus einem Silikon oder Silikonschaum besteht.

Erfindungsgemäß ist der Temperatursensor zwischen dem Trägerelement und der thermischen Isolationseinheit angeordnet.

In einer weiteren Ausgestaltung umfasst die Vorrichtung zumindest eine Führung zum Führen zumindest einer Anschlussleitung zumindest des Temperatursensors. Die Verwendung einer Führung dient der mechanischen Stabilisierung der Anschlussleitungen und verhindert ein unerwünschtes Abreißen der Anschlussleitungen. Im Falle, dass eine thermische Isolationseinheit vorhanden ist, ist die Führung insbesondere derart ausgestaltet und angeordnet, dass die zumindest eine Anschlussleitung durch die Isolationseinheit hindurch führbar ist. Bei der Führung handelt es sich beispielsweise um eine Hülse oder einen Kanal. Die Anzahl der verwendeten Führungen hängt von der Anzahl der Anschlussleitungen und von der Anzahl der an dem Trägerelement befestigten Komponenten, beispielsweise weitere Temperatursensoren, ein Heizelement oder ein Referenzelement, ab.

In einer besonders bevorzugten Ausgestaltung ist der Temperatursensor mittels eines flexiblen Klebers an dem Trägerelement befestigt. Auf diese Weise kann ein gleichbleibender mechanischer bzw. thermischer Kontakt des Temperatursensors und der Trägerelements unabhängig von einem Außenradius des Behältnisses, entlang welchen Außenradius das Trägerelement um das Behältnis herum angeordnet wird, gewährleistet werden. Es entstehen vorteilhafterweise keine Luftspalte zwischen einzelnen Teilbereichen des Temperatursensors und des Trägerelements.

Eine Befestigung mittels eines Klebers ist aber im Rahmen der vorliegenden Erfindung keineswegs notwendig. Vielmehr können alle üblichen Befestigungsweisen zur Befestigung eines Temperatursensors genutzt werden. Insbesondere kann der Temperatursensor in anderen Ausgestaltungen der Erfindung beispielsweise auch auf das Trägerelement aufgelötet sein.

In noch einer besonders bevorzugten Ausgestaltung besteht das Trägerelement aus zumindest zwei übereinander angeordneten flexiblen Schichten. Auch die Ausgestaltung des Trägerelements aus mehreren übereinander angeordneten flexiblen Schichten dient der Vermeidung von Luftspalten zwischen einzelnen Teilbereichen des Temperatursensors und dem Trägerelement. Im Falle eines derart ausgestalteten Trägerelements ist die Verwendung eines flexiblen Klebers nicht zwingend notwendig.

Eine weitere Ausgestaltung beinhaltet, dass die Vorrichtung Befestigungsmittel zur, insbesondere lösbaren, Befestigung der Vorrichtung an dem Behältnis umfasst. In dieser Hinsicht kommen alle dem Fachmann üblichen und geeigneten Befestigungsmittel, wie z.B. Rohrschellen, in Betracht und fallen unter die vorliegende Erfindung.

Dabei ist es von Vorteil, wenn die Befestigungsmittel dazu ausgestaltet sind, einen vorgebbaren Anpressdruck des Trägerelements an das Behältnis zu gewährleisten. Hierdurch lässt sich ein guter und reproduzierbarer thermischer Kontakt zwischen einer Wandung des Behältnisses und dem Trägerelement gewährleisten.

Es ist ebenfalls von Vorteil, wenn die Befestigungsmittel zumindest ein elastisches Element, insbesondere eine Feder aufweisen. Mit einer elastischen Befestigung kann über dasselbe Befestigungsmittel geeignet auf unterschiedliche Außenradien, insbesondere Durchmesser, der jeweils verwendeten Behältnisse reagiert werden.

Insbesondere ist jeweils unabhängig vom Außenradius im Wesentlichen der gleiche Anpressdruck gewährleistbar.

Eine weitere Ausgestaltung beinhaltet, dass es sich bei dem Behältnis um eine Rohrleitung handelt, wobei das Trägerelement so ausgestaltet ist, dass es senkrecht zur Längsachse durch die Rohrleitung um die Rohrleitung herum anordenbar ist.

Anhand der nachfolgenden Figuren wird die Erfindung näher erläutert. Es zeigt:
Fig. 1: ein Thermometer zur nicht invasiven Temperaturmessung nach Stand der Technik;
Fig. 2: eine erste Ausgestaltung für ein Thermometer mit einem einzigen Temperatursensor;
Fig. 3: eine zweite Ausgestaltung für ein Thermometer mit zwei Temperatursensoren, einem Heizelement und einem Referenzelement;
Fig. 4: eine dritte Ausgestaltung für ein erfindungsgemäßes Thermometer mit einer thermischen Isolationseinheit;
Fig. 5: eine vierte Ausgestaltung mit einer Befestigungseinheit umfassend ein elastisches Element; und
Fig. 6: ein aus mehreren Schichten aufgebautes Trägerelement.

In den Figuren sind gleiche Elemente jeweils mit demselben Bezugszeichen versehen.

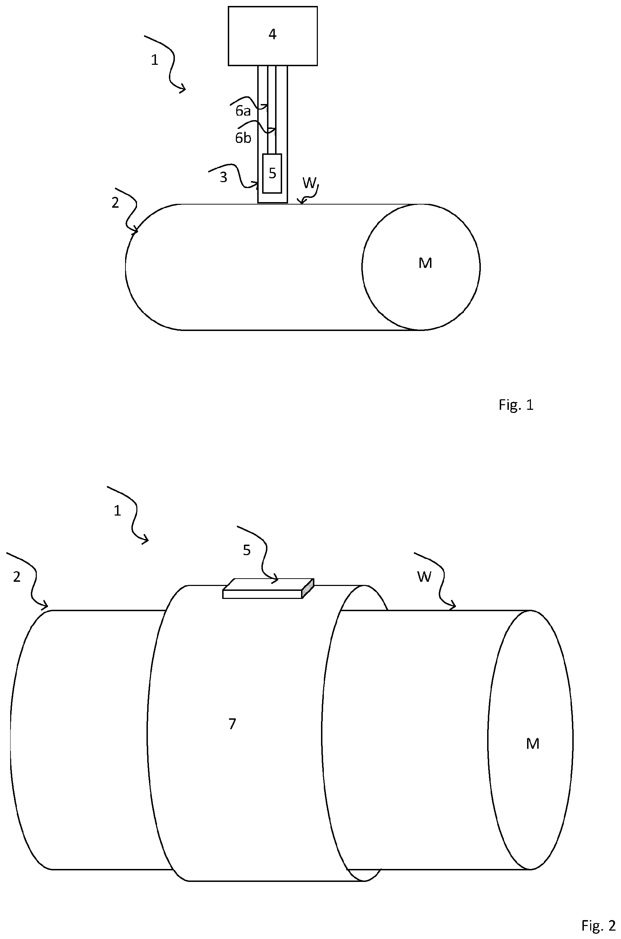

In Fig.1 ist eine schematische Abbildung eines Thermometers 1 gemäß Stand der Technik mit einem Messeinsatz 3 und einer Elektronik 4 gezeigt. Das Thermometer 1 dient der Erfassung der Temperatur T eines Mediums M, welches sich in einem Behältnis 2, hier in Form einer Rohrleitung, befindet. Zu diesem Zweck ragt das Thermometer 1 nicht in die Rohrleitung 2 hinein, sondern ist vielmehr zur nicht invasiven Temperaturbestimmung von außen auf eine Wandung W der Rohrleitung 2 aufgesetzt. Der Messeinsatz 3 umfasst einen Temperatursensor 5, welcher im vorliegenden Fall ein temperatursensitives Element in Form eines Widerstandselements umfasst. Der Temperatursensor 5 ist über die Anschlussleitungen 6a, 6b elektrisch kontaktiert und mit der Elektronik 4 verbunden. Während das gezeigte Thermometer 1 in kompakter Bauweise mit integrierter Elektronik 4 ausgeführt ist, kann bei anderen Thermometern 1 die Elektronik 4 auch separat von dem Messeinsatz 3 angeordnet sein. Auch muss es sich bei dem Temperatursensor 5 nicht notwendigerweise um ein Widerstandselement handeln und die Anzahl der verwendeten Anschlussleitungen 6 muss nicht notwendigerweise zwei betragen. Vielmehr kann die Anzahl der Anschlussleitungen 6 je nach angewendetem Messprinzip und verwendetem Temperatursensor 5 passend gewählt werden.

Wie bereits dargelegt, hängt die Messgenauigkeit eines solchen Thermometers 1 in hohem Maße von den jeweiligen für das Thermometer verwendeten Materialien und von den jeweiligen, insbesondere thermischen, Kontaktierungen, insbesondere im Bereich des Temperatursensors 5, ab. Der Temperatursensor 5 steht mittelbar, d.h. über den Messeinsatz 2 und über die Wandung W des Behältnisses 2, mit dem Medium M in thermischem Kontakt. Eine große Rolle spielt in diesem Zusammenhang auch eine Wärmeableitung vom Medium M an die Umgebung, welche für einen unerwünschten Temperaturgradienten im Bereich des Temperatursensors 5 führen kann.

Um diesen Problematiken geeignet zu begegnen, wird im Rahmen der vorliegenden Erfindung eine alternative Ausgestaltung für ein nicht invasives Thermometer 1 vorgeschlagen, wie in den folgenden Figuren anhand einiger bevorzugter, beispielhafter Ausgestaltungen gezeigt.

Eine erste Ausgestaltung eines Thermometers 1 ist in Fig. 2 gezeigt. Das Thermometer 1 umfasst ein flexibles wärmeleitfähiges Trägerelement 7, welches Trägerelement 7 an einer Außenwandung W des Behältnis 2 angeordnet ist. Für das hier gezeigte Beispiel mit einem Behältnis 2 in Form einer Rohrleitung ist das Trägerelement 7 senkrecht zur Längsachse der Rohrleitung 2 um die Außenwandung W der Rohrleitung 2 herum angeordnet. Das Trägerelement 7 ist also an die Konturen des Behältnisses 2 angepasst. Es sei darauf verwiesen, dass eine erfindungsgemäße Vorrichtung 1 auch in Zusammenhang mit Behältern, Containern oder auch anderen Arten von Behältnissen verwendet werden kann. Das Trägerelement 7 ist jeweils an der Außenwandung W des verwendeten Behältnisses 2 angeordnet, und entsprechend an dessen Kontur in einem vorgebbaren Bereich angepasst.

An dem Trägerelement 7 ist der Temperatursensor 5 befestigt. Der Temperatursensor 5 ist in einem dem Prozess, und damit der Außenwandung W des Behältnisses 2 abgewandten Bereich des Trägerelements 7 an dem Trägerelement 7 befestigt. Im fortlaufenden Betrieb dient das Trägerelement 7 dazu, ausgehend von der Wandung W des Behältnisses 2 Wärme aus dem jeweiligen Prozess, also von dem Medium M, zu dem Temperatursensor 5 zu leiten. Dadurch, dass das Trägerelement 7 entlang seiner Oberfläche an der Wandung W des Behältnisses 7 angeordnet ist, besteht ein guter thermischer Kontakt zur Wandung W und damit zum Prozess bzw. zu dem Medium M. Somit ist der Temperatursensor 5 im Wesentlichen im thermischen Gleichgewicht mit dem Medium M, was zu einer hohen Messgenauigkeit der jeweiligen Vorrichtung 1 führt.

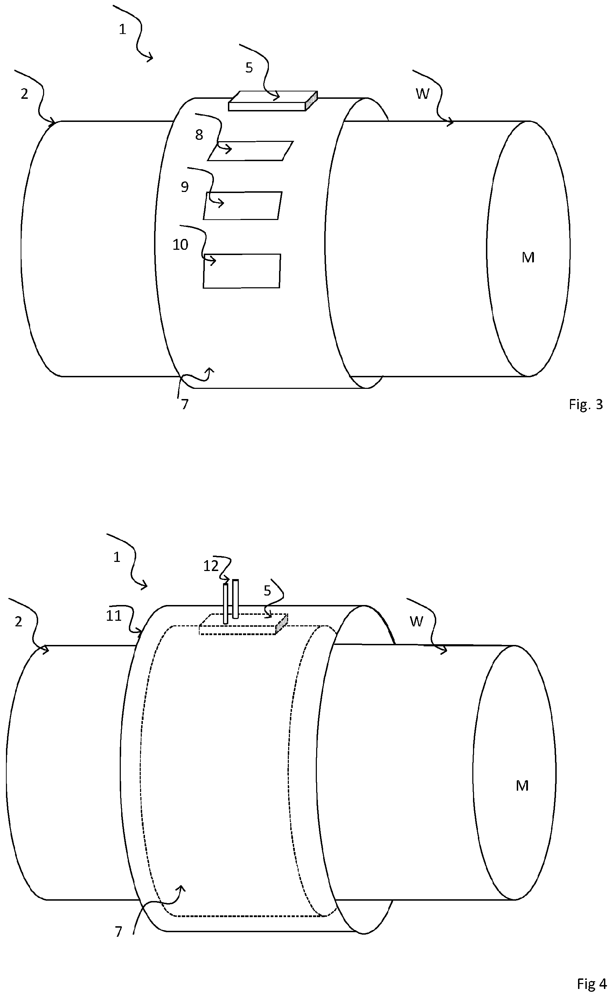

Neben dem Temperatursensor 5 kann die Vorrichtung 1 noch über weitere Komponenten verfügen, wie beispielhaft in Fig. 3 illustriert. Im Vergleich zur in Fig. 2 gezeigten Ausgestaltung umfasst die Vorrichtung 1 hier zusätzlich ein Heizelement 8, ein Referenzelement 9 und einen weiteren Temperatursensor 10.

Bei der in Fig. 4 gezeigten Ausgestaltung verfügt das Thermometer 1 ferner über eine thermische Isolationseinheit 11, welche hier beispielhaft das Trägerelement 7 vollständig umgibt. In anderen Ausgestaltungen wäre auch eine Isolationseinheit 11 denkbar, welche das Trägerelement 7 teilweise umgibt. Der Temperatursensor 5 ist zwischen der thermischen Isolationseinheit 11 und dem Trägerelement 7 angeordnet. Die Isolationseinheit 11 dient der Isolation gegenüber der Umgebung und dient der Vermeidung von Wärmeleitung von dem Trägerelement 7 und/oder dem Temperatursensor 5 an die Umgebung. Ferner umfasst die Vorrichtung 1 hier beispielhaft zwei Führungen 12 zum Führen von Anschlussleitungen 6 des Temperatursensor 5, welche auch durch die Isolationseinheit 11 geführt sind. Es sei darauf verwiesen, dass die Führungen 12 auch in Zusammenhang mit Ausgestaltungen ohne Isolationseinheit 11 verwendbar sind, und dass die Anzahl an verwendeten Führungen 12 von der Anzahl und Anordnung der Anschlussleitungen 6 der Vorrichtung 1 abhängt. Die hier gezeigte Ausgestaltung ist also lediglich als ein mögliches Beispiel zu verstehen.

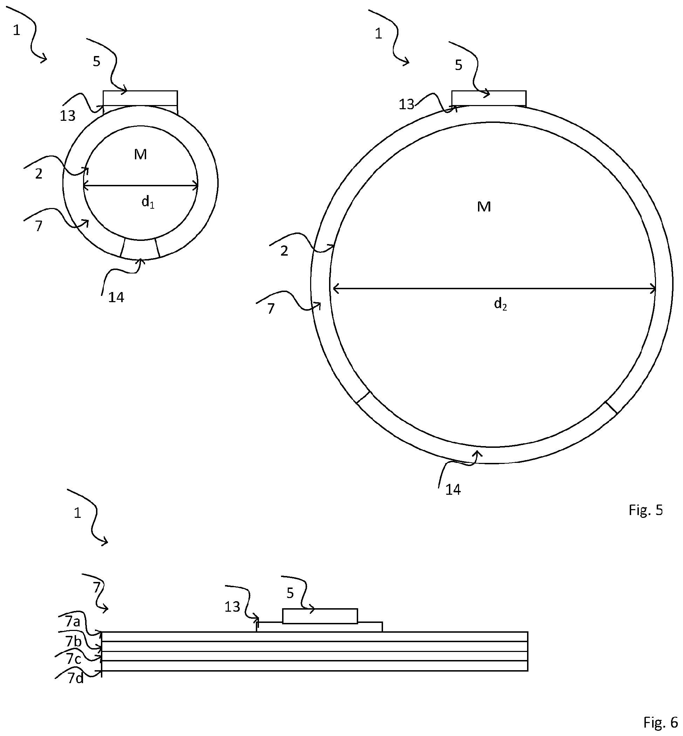

In der in Fig. 5 gezeigten Ausgestaltung verfügt die Vorrichtung 1 über Befestigungsmittel 14, welche hier beispielhaft ein elastisches Element in Form einer Feder umfassen. Mittels der Befestigungsmittel 14 kann die Vorrichtung 1 an Behältnisse 2 mit unterschiedlichem Außenradius angebracht werden. Vorliegend sind in den Figuren Fig. 5a und Fig. 5b wie bei den vorangegangenen Figuren Behältnisse 2 in Form von Rohrleitungen mit unterschiedlichen Durchmessern d₁ und d₂ gewählt worden, wobei d₂>d₁. Das Befestigungsmittel 14 dient dazu, unabhängig vom jeweils verwendeten Behältnis einen gleichbleibenden und guten thermischen Kontakt des Trägerelements 7 bzw. des Temperatursensors 5 mit der Wandung W des Behältnisses 2, bzw. mit dem Medium zu gewährleisten. Durch die Verwendung eines Befestigungsmittels 14 mit einem elastischen Element ist die Gewährleistung eines vorgebbaren Anpressdrucks des Trägerelements 7 an die Wandung W des Behältnisses auf besonders einfache Art und Weise realisierbar. Trotzdem sind zahlreiche andere Befestigungsweisen bekannt, die ebenfalls im Rahmen der vorliegenden Erfindung anwendbar sind.

Um auch eine gleichbleibende thermische Kontaktierung des Temperatursensors 5 mit dem Trägerelement 7 zu erreichen, ist der Temperatursensor 5 für die gezeigte Ausgestaltung mittels eines flexiblen Klebers 13 an dem Trägerelement 7 befestigt. Der Kleber passt sich der Krümmung des Trägerelements 7 an, welche wiederum an die Außenwandung W des Behältnisses 2 angepasst ist.

Eine solche, gleichbleibende Kontaktierung zwischen dem Temperatursensor 5 und dem Trägerelement 7 kann aber ebenfalls durch einen mehrschichtigen Aufbau des Trägerelements 7 realisiert werden, wie schließlich in Fig. 6 illustriert. Das hier gezeigte Trägerelement 7 ist aus vier übereinander angeordneten Schichten 7a-7d aufgebaut. Es versteht sich von selbst, dass die Anzahl verwendeter Schichten von Ausgestaltung zu Ausgestaltung variieren kann. Im Falle der Verwendung eines mehrschichtigen Trägerelements 7 kann auch ein starrer Kleber 13 zur Befestigung des Temperatursensors 5 auf dem Trägerelement 7 verwendet werden.

### Bezugszeichenliste

- 1: Vorrichtung
- 2: Behältnis
- 3: Messeinsatz
- 4: Elektronik
- 5: Temperatursensor
- 6: Anschlussdrähte
- 7: Trägerelement
- 8: Heizelement
- 9: Referenzelement
- 10: Weiterer Temperatursensor
- 11: Thermische Isolationseinheit
- 12: Führung
- 13: Kleber
- 14: Befestigungsmittel

- M: Medium
- T: Temperatur
- W: Wandung des Behältnisses

## Patentansprüche

1. Vorrichtung (1) zur Bestimmung und/oder Überwachung einer Prozessgröße, insbesondere der Temperatur (T) oder des Durchflusses, eines Mediums (M) in einem Behältnis (2) umfassend:
einen Temperatursensor (5) zur Erfassung der Temperatur (T), und
ein flexibles, wärmeleitfähiges Trägerelement (7) bestehend aus einem metallischen Gewebe oder Geflecht, welches Trägerelement (7) an einer Außenwandung (W) des Behältnisses (2) anordenbar ist, und wobei der Temperatursensor (5) auf dem Trägerelement (7) befestigt ist, umfassend eine thermische Isolationseinheit (11), welche das Trägerelement (7) zumindest teilweise umgibt,
wobei der Temperatursensor (5) zwischen dem Trägerelement (7) und der thermischen Isolationseinheit (11) angeordnet ist.

2. Vorrichtung (1) nach Anspruch 1,
wobei es sich bei dem Temperatursensor (5) um ein Widerstandselement oder um ein Thermoelement handelt.

3. Vorrichtung (1) nach Anspruch 1 oder 2,
umfassend zumindest ein Referenzelement (8) zur in situ Kalibrierung und/oder Validierung zumindest des Temperatursensors (5), welches auf dem Trägerelement (7) befestigt ist, und welches Referenzelement (8) zumindest teilweise aus zumindest einem Material besteht, für welches Material im zur Kalibrierung des ersten Temperatursensors (5) relevanten Temperaturbereich zumindest ein Phasenübergang bei zumindest einer vorgegebenen Phasenübergangstemperatur auftritt, für welchen Phasenübergang das Material in der festen Phase verbleibt.

4. Vorrichtung (1) nach zumindest einem der vorherigen Ansprüche,
umfassend ein Heizelement (9), welches auf dem Trägerelement (7) befestigt ist.

5. Vorrichtung (1) nach zumindest einem der vorherigen Ansprüche,
wobei das metallische Gewebe oder Geflecht Kupferaufweist.

6. Vorrichtung (1) nach zumindest einem der vorherigen Ansprüche,
wobei die thermische Isolationseinheit (11) zumindest teilweise aus einem Silikon oder Silikonschaum besteht.

7. Vorrichtung (1) nach zumindest einem der vorherigen Ansprüche,
umfassend zumindest eine Führung (12) zum Führen zumindest einer Anschlussleitung (6) zumindest des Temperatursensors (5).

8. Vorrichtung (1) nach zumindest einem der vorherigen Ansprüche,
wobei zumindest der Temperatursensor (5) mittels eines flexiblen Klebers (13) an dem Trägerelement (7) befestigt ist.

9. Vorrichtung (1) nach zumindest einem der vorherigen Ansprüche,
wobei das Trägerelement (7) aus zumindest zwei übereinander angeordneten flexiblen Schichten (7a-7d) besteht.

10. Vorrichtung (1) nach zumindest einem der vorherigen Ansprüche,
umfassend Befestigungsmittel (14) zur, insbesondere lösbaren, Befestigung der Vorrichtung (1) an dem Behältnis (2).

11. Vorrichtung (1) nach Anspruch 10,
wobei die Befestigungsmittel (14) dazu ausgestaltet sind, einen vorgebbaren Anpressdruck des Trägerelements (7) an das Behältnis (7) zu gewährleisten.

12. Vorrichtung (1) nach Anspruch 10 oder 11,
wobei die Befestigungsmittel (14) zumindest ein elastisches Element, insbesondere eine Feder aufweisen.

13. Vorrichtung (1) nach zumindest einem der vorherigen Ansprüche,
wobei es sich bei dem Behältnis um eine Rohrleitung (2) handelt, wobei das Trägerelement (7) so ausgestaltet ist, dass es senkrecht zur Längsachse durch die Rohrleitung (2) um die Rohrleitung (2) herum anordenbar ist.

## Claims

1. A device (1) for determining and/or monitoring a process variable, in particular the temperature (T) or flow, of a medium (M) in a container (2) comprising:
A temperature sensor (5) for detecting the temperature (T), and
a flexible, thermally conductive carrier element (7) consisting of a metallic fabric or mesh, with it being possible to arrange said carrier element (7) on an outer wall (W) of the container (2), and wherein the temperature sensor (5) is fastened to the carrier element (7), comprising a thermal insulation unit (11), which at least partially surrounds the carrier element (7),
wherein the temperature sensor (5) is arranged between the carrier element (7) and the thermal insulation unit (11).

2. The device (1) as claimed in claim 1,
wherein the temperature sensor (5) is a resistance element or a thermocouple.

3. The device (1) as claimed in claim 1 or 2,
comprising at least one reference element (8) for the in situ calibration and/or validation of at least the temperature sensor (5), which is fastened to the carrier element (7), and said reference element (8) at least partially consisting of at least one material, for which material in the temperature range relevant for the calibration of the first temperature sensor (5) at least one phase transition occurs at at least one specified phase transition temperature, for which phase transition the material remains in the solid phase.

4. The device (1) as claimed in at least one of the preceding claims,
comprising a heating element (9) which is fastened to the carrier element (7).

5. The device (1) as claimed in at least one of the preceding claims,
wherein the metallic fabric or mesh contains copper.

6. The device (1) as claimed in at least one of the preceding claims,
wherein the thermal insulation (11) consists at least partially of a silicone or silicone foam.

7. The device (1) as claimed in at least one of the preceding claims,
comprising at least one guide (12) for guiding at least one connection cable (6) of at least the temperature sensor (5).

8. The device (1) as claimed in at least one of the preceding claims,
wherein at least the temperature sensor (5) is fastened to the carrier element (7) using a flexible adhesive (13).

9. The device (1) as claimed in at least one of the preceding claims,
wherein the carrier element (7) consists of at least two flexible layers (7a-7d) arranged on top of each other.

10. The device (1) as claimed in at least one of the preceding claims,
comprising fastening means (14) for fastening the device (1) to the container (2), in particular in such a way that it can be released.

11. The device (1) as claimed in claim 10,
wherein the fastening means (14) are configured to ensure that the carrier element (7) exerts a specifiable contact pressure on the container (2).

12. The device (1) as claimed in claim 10 or 11,
wherein the fastening means (14) have at least one flexible element, in particular a spring.

13. The device (1) as claimed in at least one of the preceding claims,
wherein the container is a pipeline (2), wherein the carrier element (7) is configured so that it can be arranged around the pipeline (2) in such a way that it is perpendicular to the longitudinal axis through the pipeline (2).

## Revendications

1. Dispositif (1) destiné à la détermination et/ou à la surveillance d'une grandeur process, notamment la température (T) ou le débit d'un produit (M) dans un réservoir (2), lequel dispositif comprend :
un capteur de température (5) destiné à mesurer la température (T), et
un élément support (7) flexible et thermoconducteur, lequel élément est constitué d'un tissu ou d'un treillis métallique, lequel élément support (7) peut être disposé sur une paroi extérieure (W) du réservoir (2), et le capteur de température (5) étant fixé sur l'élément support (7), lequel élément comprend une unité d'isolation thermique (11), laquelle unité entoure au moins partiellement l'élément support (7),
le capteur de température (5) étant disposé entre l'élément support (7) et l'unité d'isolation thermique (11).

2. Dispositif (1) selon la revendication 1,
pour lequel le capteur de température (5) est un élément résistif ou un thermocouple.

3. Dispositif (1) selon la revendication 1 ou 2,
lequel dispositif comprend au moins un élément de référence (8) destiné à l'étalonnage et/ou à la validation in situ au moins du capteur de température (5), lequel capteur est fixé sur l'élément support (7), et lequel élément de référence (8) est constitué au moins en partie d'au moins un matériau pour lequel, dans la gamme de température pertinente pour l'étalonnage du premier capteur de température (5), au moins une transition de phase se produit à au moins une température de transition de phase prédéfinie, transition de phase pour laquelle le matériau reste à l'état solide.

4. Dispositif (1) selon au moins l'une des revendications précédentes,
lequel dispositif comprend un élément chauffant (9) fixé sur l'élément support (7).

5. Dispositif (1) selon au moins l'une des revendications précédentes,
pour lequel le tissu ou le treillis métallique comprend du cuivre.

6. Dispositif (1) selon au moins l'une des revendications précédentes,
pour lequel l'unité d'isolation thermique (11) est constituée au moins en partie de silicone ou de mousse de silicone.

7. Dispositif (1) selon au moins l'une des revendications précédentes,
lequel dispositif comprend au moins un guide (12) destiné à guider au moins un câble de raccordement (6) au moins du capteur de température (5).

8. Dispositif (1) selon au moins l'une des revendications précédentes,
pour lequel au moins le capteur de température (5) est fixé à l'élément support (7) au moyen d'un adhésif flexible (13).

9. Dispositif (1) selon au moins l'une des revendications précédentes,
pour lequel l'élément support (7) est constitué d'au moins deux couches flexibles (7a-7d) superposées.

10. Dispositif (1) selon au moins l'une des revendications précédentes,
lequel dispositif comprend des moyens de fixation (14) pour la fixation, notamment amovible, du dispositif (1) au réservoir (2).

11. Dispositif (1) selon la revendication 10,
pour lequel les moyens de fixation (14) sont conçus pour garantir une pression d'appui prédéfinie de l'élément support (7) sur le réservoir (2).

12. Dispositif (1) selon la revendication 10 ou 11,
pour lequel les moyens de fixation (14) comportent au moins un élément élastique, notamment un ressort.

13. Dispositif (1) selon au moins l'une des revendications précédentes,
pour lequel le réservoir est une conduite (2), l'élément support (7) étant conçu de manière à pouvoir être disposé perpendiculairement à l'axe longitudinal à travers la conduite (2) autour de la conduite (2).
